# EUROPÄISCHE PATENTANMELDUNG

(11) **EP 4 417 028 A1**
(43) Veröffentlichungstag der Anmeldung: **21.08.2024**
(21) Anmeldenummer: 23157298.3
(22) Anmeldetag: 17.02.2023
(51) Int. Cl.: A01B 19/10, A01B 39/18, A01B 61/04

(54) **BODENBEARBEITUNGSVORRICHTUNG**

(71) Anmelder: Treffler Maschinenbau GmbH & Co. KG, 86554 Pöttmes-Echsheim (DE)
(72) Erfinder: TREFFLER, Paul, 86554 Pöttmes-Echsheim (DE)
(74) Vertreter: TBK

(57) **Zusammenfassung**

Eine Bodenbearbeitungsvorrichtung (1; 2; 3) ist konfiguriert, in einer Fahrtrichtung (FR) bewegt zu werden und eine Bodenbearbeitung durchzuführen. Die Bodenbearbeitungsvorrichtung (1; 2; 3) hat einen Rahmen (10), der über dem Boden in der Fahrtrichtung (FR) zu bewegen ist, und eine Vielzahl von Werkzeugen (20). Die Werkzeuge (20) sind in mehreren quer zu der Fahrtrichtung (FR) verlaufenden Querreihen (Q1, Q2, Q3) angeordnet, um zumindest einen Teil der Bodenbearbeitung durchzuführen. Jedes Werkzeug (20) hat ein Lager (22), um welches es zwischen einer Arbeitslage, in der der Boden bearbeitet wird, und einer Ruhelage schwenkbar ist, in der der Boden nicht bearbeitet wird. Jedes Lager (22) verbindet das jeweilige Werkzeug (20) mit dem Rahmen (10), und die Werkzeuge (20) sind unabhängig voneinander schwenkbar. Die Bodenbearbeitungsvorrichtung (1; 2; 3) hat ferner eine Aushubvorrichtung (30), die jedes der Werkzeuge (20) von der Arbeitslage in die Ruhelage schwenken kann. Die Vielzahl der Werkzeuge (20) ist in mehreren Untergruppen unterteilt, und eine oder mehrere Untergruppen bilden eine Gruppe (G1-G4), sodass die Werkzeuge (20) in mindestens zwei Gruppen unterteilt sind. Die Aushubvorrichtung (30) ist in der Lage, jede Gruppe (G1-G4) separat zu betätigen, um die Werkzeuge (20) der betätigten Gruppe (G1-G4) von der Arbeitslage zu der Ruhelage zu bewegen und dort zu halten. Damit wird eine bereichsweise Bodenbearbeitung ermöglicht.

## Beschreibung

### Technisches Gebiet der Erfindung

Die vorliegende Erfindung betrifft eine Bodenbearbeitungsvorrichtung.

### Stand der Technik

In dem Stand der Technik ist eine Bodenbearbeitungsvorrichtung ein landwirtschaftliches Gerät zur Bodenbearbeitung, das für die Boden- und Saatbearbeitung von Kulturpflanzen im landwirtschaftlichen Ackerbau geeignet ist. Verwendet wird dieses Gerät unter anderem als Pflegegerät für den Anbau von Kartoffeln, Mais, Bohnen, Salat, Raps, allgemeinem Gemüse und Getreide, die vorzugsweise in Reihe gesät werden. Ein Beispiel für eine Bodenbearbeitungsvorrichtung ist eine in DE 39 00 100 A1 offenbarte Egge, bei welcher einzelne Zinken gegen die Kraft einer Feder um die Längsachse eines Zinkenträgers schwenkbar gelagert sind, wobei die Feder mit ihrem einen Ende an der Zinke und mit ihrem anderen Ende ortsfest befestigt ist. Dadurch wird ein konstanter Zinkendruck gegen den Boden erzielt.

Die Bodenbearbeitungsvorrichtung wird in einer Fahrtrichtung bewegt, um mit situationsabhängigen Werkzeugen, beispielsweise Zinken, den Boden darunter zu bearbeiten. Dabei kann die Bodenbearbeitung sowohl eine unmittelbare Bearbeitung des Erdreichs als auch eine Bearbeitung von in dem Erdreich gepflanzten Pflanzen umfassen. Da die Bodenbearbeitungsvorrichtung eine gewisse Breite hat, kann sie eine Fläche in Form eines Streifens mit konstanter Breite und rechtwinkligen Ecken bearbeiten. Der Anbau erfolgt jedoch häufig auf Flächen mit irregulären Formen, die nicht vollständig durch derartige Streifen abgedeckt werden können. Zudem kann es erwünscht sein, nur einen Teil der Reihen zu bearbeiten, beispielsweise jede dritte Reihe. Daher kommt es zu einer Situation, in welcher eine Fläche, deren Bearbeitung abgeschlossen ist, trotzdem erneut überfahren und somit bearbeitet wird.

### Zusammenfassung der Erfindung

Der Erfindung liegt die Aufgabe zugrunde, eine bereichsweise Bodenbearbeitung zu ermöglichen, bei welcher Feldbereiche und Pflanzreihen, die gerade nicht zu bearbeiten sind oder bereits bearbeitet wurden, bei einer erneuten Überfahrt vor den darüber liegenden Werkzeugen geschützt sind.

Diese Aufgabe wird durch eine Bodenbearbeitungsvorrichtung gemäß Anspruch 1 gelöst. Vorteilhafte Weiterbildungen sind Gegenstand der Unteransprüche.

Die erfindungsgemäße Bodenbearbeitungsvorrichtung ist konfiguriert, in einer Fahrtrichtung bewegt zu werden und eine Bodenbearbeitung durchzuführen. Die Bodenbearbeitungsvorrichtung hat einen Rahmen, der über dem Boden in der Fahrtrichtung zu bewegen ist, und eine Vielzahl von Werkzeugen. Die Werkzeuge sind in mehreren quer zu der Fahrtrichtung verlaufenden Querreihen angeordnet, um zumindest einen Teil der Bodenbearbeitung durchzuführen. Jedes Werkzeug hat ein Lager, um welches es zwischen einer Arbeitslage, in der der Boden bearbeitet wird, und einer Ruhelage schwenkbar ist, in der der Boden nicht bearbeitet wird. Jedes Lager verbindet das jeweilige Werkzeug mit dem Rahmen, und die Werkzeuge sind unabhängig voneinander schwenkbar. Die erfindungsgemäße Bodenbearbeitungsvorrichtung hat ferner eine Aushubvorrichtung, die jedes der Werkzeuge von der Arbeitslage in die Ruhelage schwenken kann. Dabei ist die Vielzahl der Werkzeuge in mehreren Untergruppen unterteilt, und eine oder mehrere Untergruppen bilden eine Gruppe, sodass die Werkzeuge in mindestens zwei Gruppen unterteilt sind. Die Aushubvorrichtung ist in der Lage, jede Gruppe separat zu betätigen, um die Werkzeuge der betätigten Gruppe von der Arbeitslage zu der Ruhelage zu bewegen und dort zu halten.

Durch den erfindungsgemäßen Aufbau wird eine Betätigung ermöglicht, durch welche ein Teil der Werkzeuge, die beispielsweise Zinkenstriegel sein können, in die Ruhelage versetzt und gehalten werden, sodass ein bevorzugter oder ein maximaler Abstand zur Bearbeitungsfläche oder Pflanze erzielt wird. Die Abgrenzung zwischen Arbeitslage und Ruhelage kann beispielsweise anhand einer Arbeitsgrenzhöhe erfolgen. Die Arbeitsgrenzhöhe kann im Falle der unmittelbaren Bearbeitung des Erdreichs beispielsweise eine Höhe sein, unterhalb welcher das Werkzeug an dem Erdreich anliegt oder in dieses eindringt. Falls die Werkzeuge nicht den unmittelbar das Erdreich, sondern die Pflanzen der Pflanzenreihen bearbeiten, kann die Arbeitsgrenzhöhe als eine Pflanzenhöhe oder darüber definiert werden. Um bei höheren Fahrgeschwindigkeiten schneller ausheben zu können, kann als Ruhelage auch eine Position zwischen der Arbeitsposition des Werkzeugs und dem maximalen Abstand zur Pflanze eingenommen werden - in frühen Stadien der Kulturpflanze ist der Abstand vom Rahmen zur Pflanze naturgemäß größer, sodass eine niedrigere Arbeitsgrenzhöhe ausreichend ist.

Um die Bereiche der bereichsweisen Bearbeitung situationsgerecht einzustellen, sind die Werkzeuge in Untergruppen unterteilt, die jeweils zu Gruppen zusammengefasst und gemeinsam betätigt werden. Durch die gemeinsame Betätigung kann die Bodenbearbeitung bereichsweise erfolgen, sodass Feldbereiche und/oder Pflanzenreihen von der Bearbeitung ausgeschlossen werden. Eine geeignete Zusammenstellung der Untergruppen und Gruppen kann beispielsweise anhand der zu erwartenden geometrischen Rahmenbedingungen erfolgen. Demnach umfasst eine Untergruppe eine Ansammlung von Werkzeugen, die eine geometrische Eigenschaft eines Feldbereichs abbilden, während eine Gruppe eine Ansammlung von Werkzeugen umfasst, deren gleichzeitiges Ausheben zweckmäßig für die bereichsweise Bearbeitung ist.

Als ein Beispiel wir der Fall einer bereichsweisen Bodenbearbeitung erläutert, bei welcher ein Feld mit mehreren Feldbereichen bearbeitet wird, wobei in einem Feldbereich alle Pflanzenreihen zu bearbeiten sind, während in einem anderen Feldbereich nur jede dritte Pflanzenreihe zu bearbeitet ist. Dies ist gleichbedeutend mit dem Fall, bei welchem in dem anderen Feldbereich der Abstand zwischen den Pflanzenreihen gegenüber demjenigen des einen Feldbereichs verdreifacht ist. In dem Beispielsfall können die Werkzeuge derart in Untergruppen unterteilt werden, dass jede Untergruppe diejenigen Werkzeuge erfasst, die genau eine Pflanzenreihe bearbeiten. Weiterhin kann eine erste Gruppe diejenigen Untergruppen erfassen, die jeder dritten Pflanzenreihe entsprechen, und eine zweite Gruppe kann diejenigen Untergruppen erfassen, die den verbleibenden Pflanzenreihen entsprechen. Folglich kann in dem Feldbereich, in welchem alle Pflanzenreihen zu bearbeiten sind, die Bearbeitung ohne Betätigung der Gruppen und somit auf übliche Weise erfolgen. Hingegen kann in dem Feldbereich, in welchem nur jede dritte Pflanzenreihe zu bearbeiten ist, die zweite Gruppe betätigt werden, sodass alle Werkzeuge, die nicht jeder dritten Pflanzenreihe entsprechen, in die Ruhelage gebracht werden und daher keine Bearbeitung durchführen. Demnach werden Feldbereiche und Pflanzreihen, die gerade nicht zu bearbeiten sind, bei einer erneuten Überfahrt vor den darüber liegenden Werkzeugen geschützt.

Somit wird durch die erfindungsgemäße Bodenbearbeitungsvorrichtung eine bereichsweise Bodenbearbeitung ermöglicht, bei welcher Feldbereiche gezielt von der Bearbeitung ausgeschlossen werden können.

Vorzugsweise sind die Werkzeuge Zinken zur mechanischen Unkrautregulierung. Zinken ermöglichen durch ihren einfachen Aufbau und ihr geringes Gewicht eine besonders kostengünstige Herstellung der Aushubvorrichtung und eine flexible Gestaltung und Umrüstung der Untergruppen und Gruppen. Zudem können bei der mechanischen Unkrautregulierung mit Zinken (Striegeln) bei einer unerwünscht wiederholten Bearbeitung sowohl das Erdreich als auch die Pflanzen stark beschädigt werden. Daher ist die erfindungsgemäße Bodenbearbeitungsvorrichtung, die Feldbereiche von der Bearbeitung ausschließen kann, in besonders hohem Maße für die mechanische Unkrautregulierung mit Zinken geeignet.

Vorzugsweise sind die Werkzeuge zudem in Längsreihen angeordnet, die parallel zu der Fahrtrichtung verlaufen. Viele Werkzeuge sind derart gestaltet, dass sie eine Pflanzenreihe mehrfach überfahren müssen, um diese abschließend zu bearbeiten. Eine Anordnung von gleichartigen Werkzeugen hintereinander in einer Längsreihe trägt dazu bei, gleichzeitig mehrere Bearbeitungen bei einer Überfahrt durchzuführen und somit die Anzahl der erforderlichen Überfahrten mit der gesamten Bodenbearbeitungsvorrichtung zu reduzieren. Zudem können verschiedenartige Werkzeuge in einer Längsreihe angeordnet werden, um mehrere, verschiedenartige Bearbeitungsschritte in einer Überfahrt durchzuführen. In diesem Fall ist zusätzlich bevorzugt, jede Werkzeugart einer Untergruppe oder Gruppe zuzuordnen, um auf einfache Weise alle Werkzeuge dieser Art in die Ruhelage bringen zu können, wenn die dazugehörige Bearbeitung nicht erforderlich ist.

Vorzugsweise wird eine Untergruppe ausschließlich durch Werkzeuge gebildet, die derselben Längsreihe angehören. Wenn zumindest eine Untergruppe derart gestaltet ist, umfasst die Untergruppe Werkzeuge, die der Ausrichtung einer Pflanzenreihe folgen. Somit wird eine bereichsweise Bearbeitung der einzelnen Pflanzenreihen vereinfacht. Zudem kann bei einer Gruppenkonfiguration, bei welcher äußerste Längsreihen ausgehoben werden, die effektive Breite der Bodenbearbeitung reduziert werden, ohne die Bodenbearbeitungsvorrichtung umrüsten zu müssen.

Alternativ oder zusätzlich wird eine Untergruppe ausschließlich durch Werkzeuge gebildet, die derselben Querreihe angehören. Dieser Aufbau vereinfacht bei gleichartigen Werkzeugen das Ausheben einer gesamten Querreihe, um beispielsweise die Intensität der Bearbeitung zu verringern. Bei verschiedenartigen Werkzeugen ist es ebenfalls zweckmäßig, jede Werkzeugart einer oder mehreren Querreihen zuzuordnen, sodass alle Werkzeuge dieser Art gleichzeitig ausgehoben werden können.

Alternativ oder zusätzlich wird eine Untergruppe durch mehrere Werkzeuge gebildet, die mehreren Längsreihen und mehreren Querreihen angehören. Wenn zumindest eine Untergruppe derart gestaltet ist, können komplexere geometrische Eigenschaften der Feldbereiche abgebildet werden, beispielsweise Rundungen. Zudem können beispielsweise Muster von ausgehobenen und nicht ausgehobenen Werkzeugen gebildet werden, beispielsweise Schachbrettmuster, um eine Bearbeitungsintensität bzw. Bearbeitungsdichte einzustellen.

Alternativ oder zusätzlich wird eine Untergruppe durch mehrere Werkzeuge gebildet, die eine diagonal verlaufende Reihe bilden. Wenn zumindest manche Gruppen eine Untergruppe mit diagonal verlaufenden Reihen umfassen, können diese Gruppen einen Feldbereich von der Bearbeitung ausschließen, der diagonal verläuft und somit in einem Winkel zu der Fahrtrichtung steht. Wie vorstehend beschrieben wurde, ist der bearbeitete Feldbereich grundsätzlich eine Fläche in Form eines Streifens mit konstanter Breite und rechtwinkligen Ecken an seinem Ende. Wenn zwei streifenförmige Flächen in einem Winkel ungleich 0° oder 90° aufeinandertreffen, kommt es daher zu einer dreieckigen Überlappung. Durch die diagonal verlaufenden Reihen hingegen können die Ecken abgeflacht (diagonal abgeschnitten) statt rechtwinklig gestaltet werden, um diese dreieckige Überlappung annäherungsweise abzubilden und die überlappenden Werkzeuge auszuheben. Demzufolge können schräge Überlappungen zweier Bearbeitungsbereiche vermieden oder minimiert werden.

Besonders vorteilhaft ist zudem eine Staffelung mehrerer der vorgenannten Gruppen mit diagonal verlaufenden Reihen nebeneinander, um ein schrittweises Vorrücken der Bodenbearbeitungsvorrichtung in der Nähe des Überlappungsbereichs zu ermöglichen. Damit wird die Überlappung weiter minimiert und die Genauigkeit der Bodenbearbeitung noch weiter verbessert.

Vorzugsweise enthält eine Gruppe benachbarte Untergruppen, zwischen welchen keine andere Untergruppe angeordnet ist. Beispielsweise wenn eine Pflanzenreihe durch mehrere Längsreihen zu bearbeiten ist, wird durch die vorgenannte Gestaltung das Betätigen der Werkzeuge vereinfacht, die eine Pflanzenreihe bearbeiten.

Weiter bevorzugt weist der Rahmen mehrere Teilrahmen auf und jeder Teilrahmen umfasst mindestens eine der vorgenannten benachbarten Untergruppen. Noch bevorzugter umfasst eine Gruppe nur Untergruppen, die demselben Teilrahmen angehören.

Durch die Gleichstellung von Gruppe und Teilrahmen wird der Aufbau vereinfacht. Zum Beispiel kann pro Teilrahmen eine als Aushubvorrichtung für die Gruppe dieses Teilrahmens vorgesehen sein. Bei manchen Bodenbearbeitungsvorrichtungen können zudem die Teilrahmen hochklappbar sein, um den Transport zu ermöglichen oder um die effektive Bearbeitungsbreite zu reduzieren. Das Hochklappen erfordert jedoch meist eine Unterbrechung der gesamten Bodenbearbeitung. Durch den vorstehend beschriebenen Aufbau können die von der Bearbeitung ausgeschlossenen Feldbereiche zügiger und mit weniger Aufwand geändert werden als bei einem Hochklappen der Teilrahmen.

Alternativ oder zusätzlich kann eine Gruppe Untergruppen umfassen, die verschiedenen Teilrahmen angehören. Somit können die von der Bearbeitung ausgeschlossenen Feldbereiche feiner eingestellt werden als bei einem reinen Hochklappen von Teilrahmen.

Vorzugsweise enthält eine Gruppe Untergruppen, die nicht benachbart sind und zwischen welchen mindestens eine andere Untergruppe angeordnet ist. Dieser Aufbau ist besonders vorteilhaft, wenn jede Pflanzenreihe einer Untergruppe entspricht, sodass jede zweite Pflanzenreihe bereichsweise von der Bearbeitung ausgeschlossen werden kann. Gleichermaßen kann es Feldbereiche geben, in denen der Abstand zwischen zwei benachbarten Pflanzenreihen doppelt so groß ist wie derjenige in anderen Feldbereichen und die Bearbeitung nur innerhalb der Pflanzenreihen erwünscht ist. Auch in diesem Fall kann durch den vorgenannten Aufbau die Bearbeitung bereichsweise ausgeschlossen werden, sodass keine unnötige Bearbeitung zwischen den Pflanzenreihen erfolgt.

Vorzugsweise weist die Aushubvorrichtung ein Aushubantriebsbauteil, das als Antrieb zur Betätigung der Werkzeuge einer Untergruppe dient, und Koppelbauteile auf, wovon jedes das Aushubantriebsbauteil mit einem der Werkzeuge koppelt, die der entsprechenden Untergruppe angehören. Dadurch wird der Aufbau der Aushubvorrichtung vereinfacht, da jede Untergruppe mit nur einem Aushubantriebsbauteil gemeinsam angetrieben wird. Alternativ kann jedes Koppelbauteil das Aushubantriebsbauteil mit mehreren der Werkzeuge koppeln, dadurch wird der Aufbau weiter vereinfacht.

Vorzugsweise ist das Aushubantriebsbauteil vor den Werkzeugen angeordnet. Dadurch kann im Falle einer gezogenen Bodenbearbeitungsvorrichtung das Aushubantriebsbauteil in der Nähe der Zugmaschine angeordnet sein, was den Gesamtaufbau vereinfacht.

Alternativ ist das Aushubantriebsbauteil hinter den Werkzeugen angeordnet. Dadurch ist das Aushubantriebsbauteil leichter zugängig und kann als Gegengewicht auf der der Zugmaschine entgegengesetzten Seite dienen.

Vorzugsweise ist das Aushubantriebsbauteil oberhalb des Rahmens angeordnet. Dadurch beeinträchtigt das Aushubantriebsbauteil nicht den Arbeitsraum der Werkzeuge, der zwischen Rahmen und Boden und somit unterhalb des Rahmens liegt.

Alternativ ist das Aushubantriebsbauteil unterhalb des Rahmens angeordnet. Dadurch wird eine Bauhöhe der Bodenbearbeitungsvorrichtung verringert. Wird eine Anordnung unterhalb des Rahmens mit einer Anordnung vor oder hinter den Werkzeugen kombiniert, kann zudem eine Beeinträchtigung des Arbeitsraums der Werkzeuge ebenfalls vermieden werden.

Vorzugsweise ist das Koppelbauteil unterhalb des Lagers mit dem Werkzeug gekoppelt. Dadurch wird die Länge des Werkzeugs minimiert, was zu einer Gewichts- und Kosteneinsparung führt. Zudem wird der Aufbau weiter vereinfacht, wenn das Antriebskoppelbauteil hinter den Werkzeugen liegt.

Alternativ ist das Koppelbauteil oberhalb des Lagers mit dem Werkzeug gekoppelt. Dadurch verläuft das Koppelbauteil nicht durch den Arbeitsraum der Werkzeuge und beeinträchtigt diesen nicht. Zudem wird der Aufbau weiter vereinfacht, wenn das Antriebskoppelbauteil vor den Werkzeugen liegt.

Vorzugsweise ist das Koppelbauteil ein Zugbauteil, das Zugkräfte übertragen kann und Druckkräfte nicht übertragen kann. Dadurch wird der Aufbau weiter vereinfacht. Bevorzugt ist das Zugbauteil ein Seil, um einen noch einfacheren Aufbau zu erzielen. Besonders bevorzugt wird das Seil um eine Welle gewickelt, die als Aushubantriebsbauteil dient. Dadurch wird ein möglichst einfacher, robuster und kostengünstiger Aufbau erzielt.

Alternativ ist das Koppelbauteil ein starres Bauteil, das sowohl Zugkräfte als auch Druckkräfte übertragen kann. Dadurch kann die Aushubvorrichtung zusätzlich dazu dienen, das Werkzeug von der Ruhelage in die Arbeitslage zu bringen.

Vorzugsweise weist das Bodenbearbeitungsvorrichtung mehrere Aushubantriebsbauteile auf. Dadurch wird ein einfacher Aufbau erzielt. Bevorzugt betätigt jedes Aushubantriebsbauteil genau eine Untergruppe. Damit wird die Kopplung zwischen Aushubantriebsbauteil und Werkzeug vereinfacht. Alternativ betätigt jedes Aushubantriebsbauteil genau eine Gruppe. Dadurch sind nur so viele Aushubantriebsbauteile erforderlich wie die Anzahl der Gruppen. Somit wird der Aufbau noch weiter vereinfacht.

Vorzugsweise wird das Aushubantriebsbauteil manuell oder auf Grundlage von Kamera-Auswertungen des Pflanzenbestandes oder auf Grundlage von Feld- oder Routenkarten mithilfe von Globalen Navigationssatellitensystemen, angesteuert. Die manuelle Ansteuerung kann beispielsweise durch den Fahrer in der Kabine erfolgen, der auf verschiedene Feldbereiche reagiert und die erforderlichen Betätigungen vornimmt. Besonders bevorzugt kann eine Kamera Bilder vor und/oder hinter der Bodenbearbeitungsvorrichtung aufnehmen, welche nach rechnergestützter Auswertung dazu genutzt werden, die Arbeitsgrenzhöhe anzupassen und/oder die zur bereichsweisen Bearbeitung erforderliche Betätigung des Aushubantriebsbauteils auszulösen, d.h. das Aushubantriebsbauteil anzusteuern. Alternativ oder zusätzlich kann die erforderliche Ansteuerung durch GPS- oder anderen globalen Navigationssatellitensystemen erfolgen, die anhand Feld- oder Routenkarten die Arbeitsgrenzhöhe bestimmen, die Feldbereiche erfassen und die dazugehörige Betätigung auslösen. Durch die vorangehenden Maßnahmen wird die Genauigkeit der bereichsweisen Bearbeitung weiter verbessert.

Vorzugsweise weist die Bodenbearbeitungsvorrichtung ferner eine Arbeitsdruckeinstellvorrichtung zum Einstellen eines Arbeitsdrucks der Werkzeuge auf. Die Arbeitsdruckeinstellvorrichtung weist ein Einstellantriebsbauteil, das als Antrieb zur Betätigung der Werkzeuge einer Untergruppe dient, und Einstellkoppelbauteile, wovon jedes das Einstellantriebsbauteil mit einem der Werkzeuge koppelt, die der entsprechenden Untergruppe angehören. Bei einem solchen Aufbau wird die Arbeitslage durch den Arbeitsdruck des jeweiligen Werkzeugs bestimmt, und jedes Werkzeug kann durch die Aushubvorrichtung in die Ruhelage versetzt werden. Damit kann die Bodenbearbeitung noch flexibler erfolgen als in dem Fall, in dem nur die Aushubvorrichtung oder nur die Arbeitsdruckeinstellvorrichtung vorgesehen sind.

Vorzugsweise kann das Einstellkoppelbauteil Zugkräfte übertragen und kann Druckkräfte nicht übertragen. Dadurch wird ein einfacher Aufbau erzielt, mit denselben Vorteilen wie bei dem Koppelbauteil der Aushubvorrichtung.

Vorzugsweise ist das Einstellkoppelbauteil unterhalb des Lagers mit dem Werkzeug gekoppelt, wenn das Koppelbauteil oberhalb des Lagers mit dem Werkzeug gekoppelt ist. Wenn hingegen das Koppelbauteil unterhalb des Lagers mit dem Werkzeug gekoppelt ist, ist das Einstellkoppelbauteil vorzugsweise oberhalb des Lagers mit dem Werkzeug gekoppelt. Dadurch können das Aushubantriebsbauteil und das Einstellantriebsbauteil auf derselben Seite vor oder hinter den Werkzeugen angeordnet sein, wodurch der Aufbau weiter vereinfacht wird.

Vorzugsweise bilden das Einstellantriebsbauteil und das Aushubantriebsbauteil eine Einheit. Dadurch wird eine Platzersparnis erzielt und der Aufbau weiter vereinfacht.

Vorzugsweise sind das Einstellantriebsbauteil und das Aushubantriebsbauteil durch eine gemeinsame Welle ausgebildet, wobei das Koppelbauteil und das Einstellkoppelbauteil durch Seile ausgebildet sind, die in gegenläufigen Richtungen um die gemeinsame Welle gewickelt sind, sodass wenn die gemeinsame Welle in einer Aushubdrehrichtung betätigt wird, das Koppelbauteil betätigt wird, um mittels Zugkräfte die Werkzeuge auszuheben, während das Einstellkoppelbauteil keine Kräfte überträgt, und wenn die gemeinsame Welle in einer Einstelldrehrichtung betätigt wird, die der Aushubdrehrichtung entgegengesetzt ist, das Einstellkoppelbauteil betätigt wird, um mittels Zugkräfte den Arbeitsdruck der Werkzeuge einzustellen, während das Koppelbauteil keine Kräfte überträgt. Dadurch können sowohl das Einstellen des Arbeitsdrucks als auch das Ausheben der Werkzeuge durch die gemeinsame Welle erfolgen. Damit wird eine Funktionsvereinheitlichung auf mechanische Weise erzielt, was den Aufbau vereinfacht und seine Robustheit verbessert. Zudem ist nur ein Antrieb pro gemeinsame Welle erforderlich. Somit werden sowohl der Aufbau als auch die Regelung weiter vereinfacht.

### Kurze Beschreibung der Zeichnungen

Fig. 1 ist eine Seitenansicht einer Bodenbearbeitungsvorrichtung gemäß einem ersten Ausführungsbeispiel der Erfindung, wobei ein Werkzeug in einer Arbeitslage gezeigt ist.
Fig. 2 ist eine Seitenansicht der Bodenbearbeitungsvorrichtung gemäß dem ersten Ausführungsbeispiel, wobei das Werkzeug in einer Ruhelage gezeigt ist.
Fig. 3 ist eine Draufsicht zur Erläuterung einer Unterteilung der Werkzeuge in Untergruppen anhand der Bodenbearbeitungsvorrichtung gemäß dem ersten Ausführungsbeispiel.
Fig. 4A ist ein Schaubild, welches eine Möglichkeit der Bildung von Gruppen aus Untergruppen darstellt.
Fig. 4B ist ein Schaubild, welches eine weitere Möglichkeit der Bildung von Gruppen aus Untergruppen darstellt.
Fig. 4C ist ein Schaubild, welches eine weitere Möglichkeit der Bildung von Gruppen aus Untergruppen darstellt.
Fig. 4D ist ein Schaubild, welches in tabellarischer Form eine weitere Möglichkeit der Bildung von Gruppen aus Untergruppen darstellt.
Fig. 5 ist eine Seitenansicht einer ersten Modifikation des ersten Ausführungsbeispiels.
Fig. 6 ist eine Seitenansicht einer zweiten Modifikation des ersten Ausführungsbeispiels.
Fig. 7 ist eine Seitenansicht einer Bodenbearbeitungsvorrichtung gemäß einem zweiten Ausführungsbeispiel der Erfindung, wobei das Werkzeug in der Arbeitslage gezeigt ist.
Fig. 8 ist eine Seitenansicht der Bodenbearbeitungsvorrichtung gemäß dem zweiten Ausführungsbeispiel, wobei das Werkzeug in einer Zwischenlage gezeigt ist.
Fig. 9 ist eine Seitenansicht der Bodenbearbeitungsvorrichtung gemäß dem zweiten Ausführungsbeispiel, wobei das Werkzeug in der Ruhelage gezeigt ist.
Fig. 10 ist eine Seitenansicht einer Bodenbearbeitungsvorrichtung gemäß einem dritten Ausführungsbeispiel, wobei das Werkzeug in der Arbeitslage gezeigt ist.
Fig. 11 ist eine Seitenansicht der Bodenbearbeitungsvorrichtung gemäß dem dritten Ausführungsbeispiel, wobei das Werkzeug in der Ruhelage gezeigt ist.

### Ausführliche Beschreibung der Ausführungsbeispiele

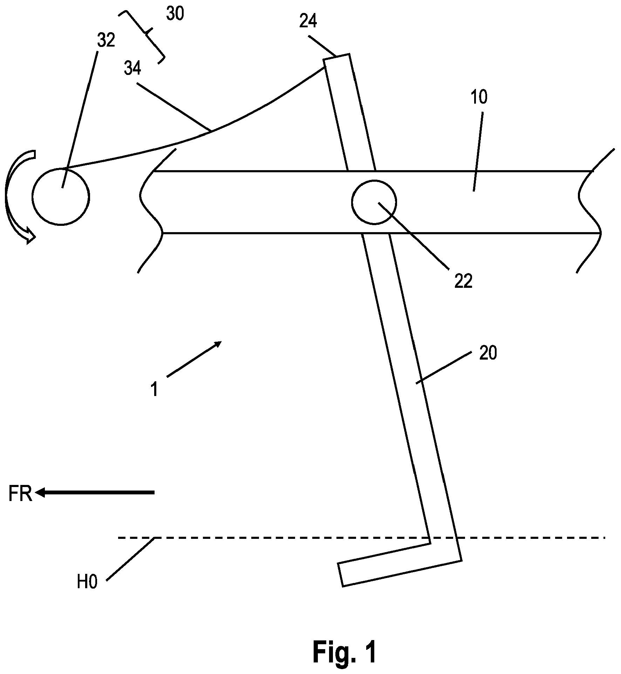

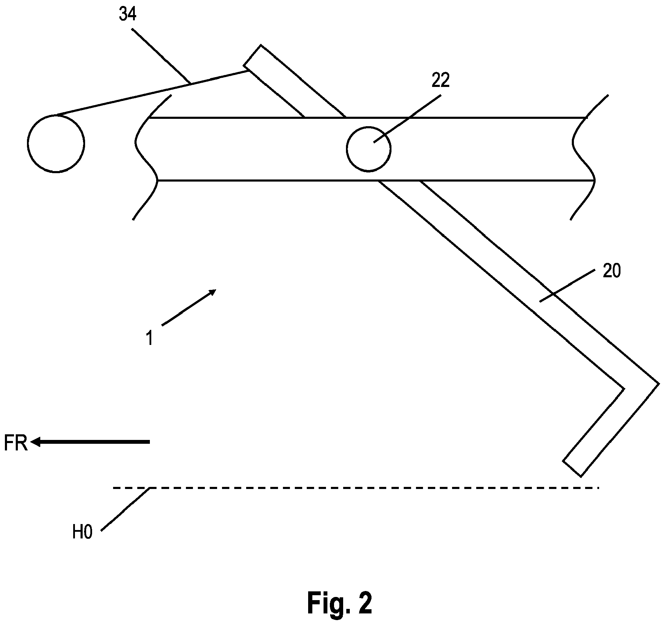

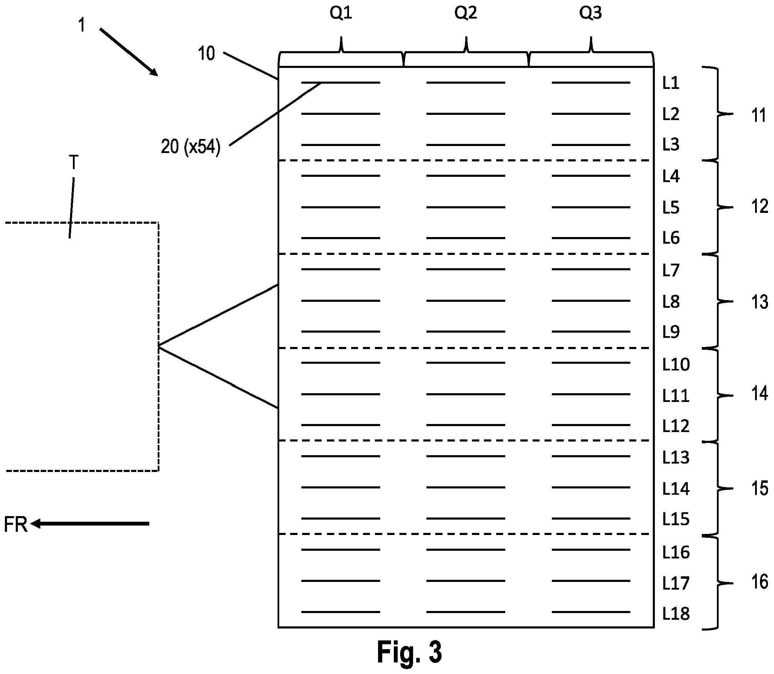

Fig. 1, Fig. 2 und Fig. 3 zeigen eine Bodenbearbeitungsvorrichtung 1 gemäß einem ersten Ausführungsbeispiel der Erfindung. Dabei sind Fig. 1 und Fig. 2 Seitenansichten und Fig. 3 ist eine Draufsicht.

Die Bodenbearbeitungsvorrichtung 1 hat einen Rahmen 10, der über dem zu bearbeitenden Boden bewegt wird, beispielsweise indem auf Rädern fährt und von einer Zugmaschine gezogen wird. Bei dem ersten Ausführungsbeispiel wird der Rahmen 10 von einem in Fig. 3 angedeuteten Traktor T gezogen, um in einer Fahrtrichtung FR bewegt zu werden. Alternativ können auch selbstfahrende oder geschobene Ausführungen umgesetzt werden.

Wie in Fig. 3 zu erkennen ist, hat der Rahmen 10 in der Draufsicht eine viereckige Form, und eine Vielzahl von Werkzeugen 20 ist an dem Rahmen 10 angebracht. Bei dem ersten Ausführungsbeispiel sind die Werkzeuge 20 jeweils Zinken, die zum Striegeln des Bodens zum Einsatz kommen und damit eine mechanische Unkrautregulierung durchführen. Es ist möglich, andere Werkzeuge als die Zinken vorzusehen sowie verschiedene Werkzeuge an dem gleichen Rahmen 10 zu kombinieren. Ferner ist der Rahmen 10 vorliegend in sechs Teilrahmen 11 bis 16 unterteilt, die ebenfalls viereckig sind. Die Teilrahmen 11 bis 16 sind untereinander schwenkbar gelagert. So ist ein Hochheben einzelner Teilrahmen und Zusammenklappen aller Teilrahmen 11 bis 16 des Rahmens 10 möglich, um den Transport der Bodenbearbeitungsvorrichtung 1 zu erleichtern.

Wie in Fig. 1 dargestellt ist, ist jedes Werkzeug 20 mittels eines Lagers 22 an dem Rahmen 10 angebracht. Das Lager 22 kann beispielsweise ein drehbarer Bolzen sein, der sowohl durch den Rahmen 10 als auch durch das Werkzeug 20 verläuft. Das Lager 22 ermöglicht eine Schwenkbewegung des Werkzeugs 20.

Genauer gesagt kann das Werkzeug 20 zwischen einer Arbeitslage, die in Fig. 1 gezeigt ist, und einer Ruhelage, die in Fig. 2 gezeigt ist, geschwenkt werden. Als die Arbeitslage wird eine Lage des Werkzeugs 20 bezeichnet, in der der Boden bearbeitet wird. Als die Ruhelage wird eine Lage des Werkzeugs 20 bezeichnet, in der der Boden nicht bearbeitet wird. Die Abgrenzung zwischen Arbeitslage und Ruhelage kann beispielsweise anhand einer Arbeitsgrenzhöhe H0 erfolgen, die in Fig. 1 und Fig. 2 eingezeichnet ist. Die Arbeitsgrenzhöhe H0 kann im Falle der unmittelbaren Bearbeitung des Erdreichs beispielsweise eine Höhe sein, unterhalb welcher das Werkzeug 20 an dem Erdreich anliegt oder in dieses eindringt. Falls die Werkzeuge nicht den unmittelbar das Erdreich, sondern die Pflanzen der Pflanzenreihen bearbeiten, kann die Arbeitsgrenzhöhe H0 als eine Pflanzenhöhe oder darüber definiert werden.

Ferner hat die Bodenbearbeitungsvorrichtung 1 eine Aushubvorrichtung 30, um jedes der Werkzeuge 20 von der Arbeitslage von Fig. 1 in die Ruhelage von Fig. 2 versetzen bzw. schwenken zu können. Die Aushubvorrichtung 30 hat bei dem ersten Ausführungsbeispiel mindestens ein Aushubantriebsbauteil 32 und mehrere Koppelbauteile 34. Das Aushubantriebsbauteil 32 dient als Antrieb zur Betätigung der Werkzeuge 20 einer Untergruppe. Jedes Koppelbauteil 34 koppelt das Aushubantriebsbauteil 32 mit je einem der Werkzeuge 20.

Bei dem ersten Ausführungsbeispiel ist das Aushubantriebsbauteil 32 eine Welle, die quer zu der Fahrtrichtung FR verläuft und vor dem Werkzeug 20 liegt, und die Koppelbauteile 34 sind Seile, die auf der Welle gewickelt werden und deren freies Ende oberhalb des Lagers 22 an einem vorstehenden Ende 24 des Werkzeugs 20 angebracht sind. Bekanntlich sind Seile Zugbauteile, die Zugkräfte übertragen können, jedoch Druckkräfte nicht übertragen können. In dem Zustand von Fig. 1 hängen die Seile lose und übertragen keine nennenswerten Zugkräfte außer ihrem Eigengewicht.

Um das Werkzeug 20 von der in Fig. 1 dargestellten Arbeitslage in die in Fig. 2 dargestellte Ruhelage zu versetzen, wird das Aushubantriebsbauteil 32 angetrieben, sodass das Koppelbauteil 34 das Werkzeug 20 betätigt. Mit anderen Worten wird die Welle (Aushubantriebsbauteil 32) in der durch einen Pfeil in Fig. 1 angezeigten Richtung gedreht, um das Seil (Koppelbauteil 34) aufzuwickeln. Durch das Aufwickeln des Seils wird das Seil angespannt, sodass es Zugkräfte auf das Werkzeug 20 aufbringt. Aufgrund der relativen Anordnung der Welle, des Koppelpunkts des Seils an dem Werkzeug 20 und des Lagers 22 wird das Werkzeug 20 verschwenkt, sodass sein unteres Ende nach oben gezogen wird. Das Seil wird aufgewickelt, bis das untere Ende des Werkzeugs 20 die Ruhelage oberhalb der Arbeitsgrenzhöhe H0 erreicht hat, was in Fig. 2 dargestellt ist.

Um das Werkzeug 20 von der Ruhelage in die Arbeitslage zu versetzen, ist bei dem ersten Ausführungsbeispiel eine nicht dargestellte Torsionsfeder vorgesehen, die das Werkzeug 20 zu der Arbeitslage drängt. Die Torsionsfeder stellt bei dem ersten Ausführungsbeispiel zudem den Arbeitsdruck des Werkzeugs 20 ein, wenn die Aushubvorrichtung das Werkzeug 20 nicht betätigt.

Wie in Fig. 3 dargestellt ist, sind die Werkzeuge 20 des ersten Ausführungsbeispiels in drei Querreihen Q1, Q2, Q3 angeordnet, die quer zu der Fahrtrichtung FR verlaufen. Die Anordnung der Werkzeuge 20 in Querreihen ist zweckmäßig, um eine gleichmäßige Bearbeitung über die gesamte Breite der Bodenbearbeitungsvorrichtung 1 zu erzielen. Selbst wenn die Werkzeuge nicht entlang einer quer verlaufenden Mittellinie, sondern von dieser abwechselnd oder teilweise um regelmäßige Abstände nach vorne und/oder nach hinten versetzt sind, kann dennoch die Mittellinie als eine Querreihe definiert werden. Die Anzahl der Querreihen ist nicht auf drei beschränkt; es kann jede beliebige Anzahl von Querreihen oder eine einzige Querreihe vorgesehen sein. Es ist besonders zweckmäßig, wenn die Anzahl der Werkzeuge 20 in einer Querreihe der Anzahl von Pflanzenreihen, die gleichzeitig zu bearbeiten sind, entspricht oder ein Vielfaches davon ist.

Ferner sind die Werkzeuge 20 des ersten Ausführungsbeispiels in Längsreihen L1 bis L18 angeordnet, die parallel zu der Fahrtrichtung FR verlaufen. Die Anordnung der Werkzeuge 20 in Längsreihen ist zweckmäßig, um die Bearbeitung jeder Pflanzenreihe durch mehrere Werkzeuge zu gewährleisten und somit die erforderliche Anzahl an Überfahrten für eine abschließende Bearbeitung zu reduzieren. Zudem können verschiedenartige Werkzeuge in einer Längsreihe angeordnet werden, um mehrere, verschiedenartige Bearbeitungsschritte in einer Überfahrt durchzuführen. Analog zu der Querreihe kann auch die Längsreihe eine Mittellinie sein, von welcher die Werkzeuge nach links und/oder nach rechts versetzt sind. Bei einer gleichmäßigen Anordnung der Werkzeuge 20, wie sie in Fig. 3 gezeigt ist, wird die maximale Anzahl der Längsreihen ermittelt, indem die zum Anbringen der Werkzeuge 20 verfügbare Breite des Rahmens 10 durch den gewünschten Abstand zwischen den Mittelpunkten der einzelnen Werkzeuge 20 geteilt wird. Es kann erforderlich sein, von der gesamten Breite des Rahmens 10 etwaige Randbereiche sowie Zwischenbereiche zwischen den Teilrahmen 11 bis 16 abzuziehen, in welchen keine Werkzeuge angebracht werden können und welche die verfügbare Breite somit reduzieren.

Wie vorstehend beschrieben ist, weist die Bodenbearbeitungsvorrichtung 1 gemäß dem ersten Ausführungsbeispiel eine Vielzahl von Werkzeugen 20 auf, die in 3 Querreihen und 18 Längsreihen angeordnet sind. Demnach liegt eine 3x18-Anordnung vor, womit insgesamt 54 der Werkzeuge 20 an dem Rahmen 10 angebracht sind.

Um eine bereichsweise Bodenbearbeitung zu ermöglichen, werden die vielzähligen Werkzeuge auf vielfältige Arten und Weisen zu Gruppen und Untergruppen zusammengefasst, wie im Folgenden beschrieben wird. Die Unterteilung in Gruppen und Untergruppen wird durch die Gestaltung der Aushubvorrichtung 30 bestimmt.

Eine Untergruppe beschreibt eine beliebige Kombination von mehreren Werkzeugen 20, wobei die Kombination je nach Bedarf definiert werden kann. Beispielsweise können die Werkzeuge 20 der ersten Querreihe Q1 als eine erste Untergruppe, die Werkzeuge 20 der zweiten Querreihe Q2 als eine zweite Untergruppe und die Werkzeuge 20 der dritten Querreihe Q3 als eine dritte Untergruppe definiert werden. Als anderes Beispiel können jeweils die Werkzeuge 20 von jeder Längsreihe L1 bis L18 als eine jeweilige Untergruppe definiert werden, sodass bei dem ersten Ausführungsbeispiel 18 Untergruppen resultieren. Als weiteres Beispiel kann auch ein einzelnes Werkzeug 20 eine Untergruppe bilden. Als noch weiteres Beispiel können Werkzeuge 20 eine Untergruppe bilden, die einer Kontur eines Randes des zu bearbeitenden Feldes folgen.

Die Untergruppen dienen dazu, eine geometrische Eigenschaft abzubilden, die die Feldbereiche (Bereiche) beschreibt, für die eine bereichsweise Bearbeitung erfolgen soll.

Bezieht sich die bereichsweise Bearbeitung auf eine Bearbeitung einzelner Pflanzenreihen, so ist eine zweckmäßige Unterteilung in Untergruppen derart, dass jede Untergruppe die Werkzeuge einer Längsreihe umfasst und somit der Ausrichtung einer Pflanzenreihe folgt.

Bezieht sich die bereichsweise Bearbeitung auf eine Bearbeitung eines diagonalen verlaufenden Randbereichs des Feldes, so ist eine zweckmäßige Unterteilung in Untergruppen derart, dass mindestens eine Untergruppe dem diagonalen Verlauf folgt. Kombinationen von Untergruppen sind ebenfalls möglich, beispielsweise mehrere längs verlaufende Untergruppen, die von mehreren diagonal verlaufenden Untergruppen umrandet werden.

Bezieht sich die bereichsweise Bearbeitung auf eine Bearbeitung verschiedener Bereiche mit verschiedenartigen Werkzeugen, die hintereinander in Querreihen angeordnet sind, so ist eine zweckmäßige Unterteilung derart, dass jede Untergruppe die gleichartigen Werkzeuge einer Querreihe umfasst.

Eine Gruppe beschreibt eine beliebige Kombination von Untergruppen, wobei die Kombination je nach Bedarf definiert werden kann. Jede Gruppe dient dazu, alle Werkzeuge 20 der dazugehörigen Untergruppen gleichzeitig mithilfe der Aushubvorrichtung zu betätigen, um die Werkzeuge 20 der betätigten Gruppe auszuheben. Somit hat eine Betätigung einer Gruppe zur Folge, dass die Werkzeuge 20, die zu der betätigten Gruppe gehören, den Boden nicht bearbeiten. Zudem werden diejenigen Werkzeuge 20, die zu der Gruppe gehören, durch ihre Untergruppen bestimmt, die wiederum mit der Geometrie der gewünschten Feldbereiche zusammenhängen. Demzufolge kann jeder Gruppe ein Feldbereich mit einer bestimmten Geometrie zugeordnet werden. Daher kann jede Gruppe separat betätigt werden, um den dazugehörigen Feldbereich von der Bearbeitung auszuschließen.

Wenn eine nicht betätigte Gruppe und eine betätigte Gruppe gleichzeitig vorliegen, wird der zu der nicht betätigten Gruppe gehörende Feldbereich bearbeitet, wohingegen der zu der betätigten Gruppe gehörende Feldbereich nicht bearbeitet wird. Dies entspricht einer bereichsweisen Bearbeitung. Für die bereichsweise Bearbeitung sind daher mindestens zwei Gruppen erforderlich. Während einer gewöhnlichen (d.h. nicht bereichsweisen) Bearbeitung sind andererseits alle Gruppen nicht betätigt, sodass die Bearbeitung mit allen Werkzeugen 20 erfolgt.

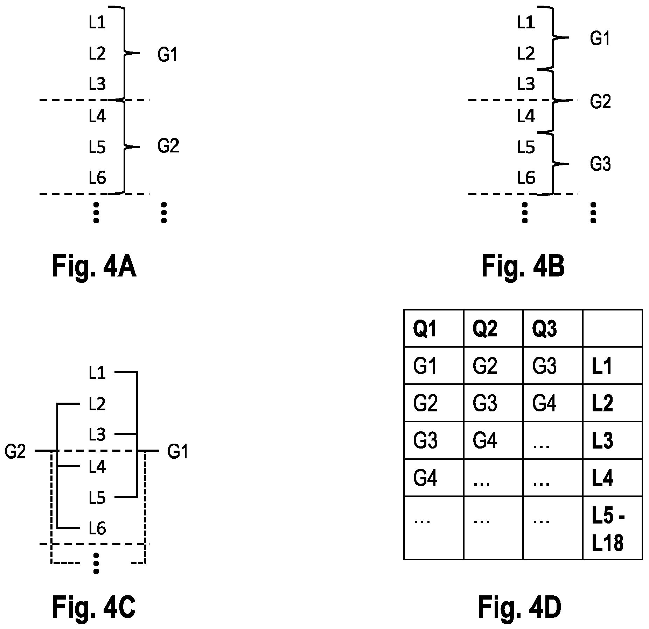

Fig. 4A, Fig. 4B und Fig. 4C zeigen mögliche Gruppen für den Fall von Untergruppen, die jeweils einer der Längsreihen L1 bis L18 von Fig. 3 entsprechen.

Die Konfiguration von Fig. 4A fasst jeweils drei benachbarte Längsreihen zu einer Gruppe zusammen. Genauer gesagt bilden die Längsreihen L1, L2 und L3 eine erste Gruppe G1, die Längsreihen L4, L5 und L6 eine zweite Gruppe G2, die Längsreihen L7, L8 und L9 eine dritte Gruppe G3 und so weiter, sodass alle 18 Längsreihen L1 bis L18 auf insgesamt sechs Gruppen G1 bis G6 aufgeteilt werden. Wie in Fig. 3 ebenfalls dargestellt ist, weist jeder Teilrahmen 11 bis 16 drei Längsreihen auf, daher entspricht jede Gruppe G1 bis G6 einem Teilrahmen 11 bis 16. Somit hat eine Betätigung der Gruppe G1 zur Folge, dass alle Werkzeuge 20 des äußersten Teilrahmen 11 ausgehoben werden. Folglich wird bei der Betätigung der Gruppe G1 ein Feldbereich von der Bearbeitung ausgeschlossen, der auf der rechten Seite der Bodenbearbeitungsvorrichtung 1 mit Bezug auf die Fahrtrichtung FR liegt. Analog kann durch eine Betätigung der Gruppe G6 ein auf der linken Seite liegender Feldbereich von der Bearbeitung ausgeschlossen werden. Ferner können beispielsweise beide äußersten Gruppen G1 und G6 betätigt werden, um eine effektive Bearbeitungsbreite zu verringern. Zusätzlich können die zweitäußersten Gruppen G2 und G5 betätigt werden, um die effektive Bearbeitungsbreite weiter zu verringern. Darüber hinaus kann der Fall vorliegen, in dem jede Pflanzenreihe von drei Längsreihen bearbeitet wird; in diesem Fall kann jede beliebige der Gruppen G1 bis G6 betätigt werden, um genau die dazugehörige Pflanzenreihe von der Bearbeitung auszuschließen.

Die Konfiguration von Fig. 4B fasst jeweils zwei benachbarte Längsreihen zu einer Gruppe zusammen. Genauer gesagt bilden die Längsreihen L1 und L2 eine erste Gruppe G1, die Längsreihen L3 und L4 eine zweite Gruppe G2, die Längsreihen L5 und L6 eine dritte Gruppe G3 und so weiter, sodass alle 18 Längsreihen L1 bis L18 auf insgesamt neun Gruppen G1 bis G9 aufgeteilt werden. Durch diese feinere Unterteilung im Vergleich zur Konfiguration von Fig. 4A können die von der Bearbeitung auszuschließenden Feldbereiche, feiner eingestellt werden. Zudem ist diese Konfiguration vorteilhaft, wenn jede Pflanzenreihe von zwei Längsreihen bearbeitet wird. Nach gleichem Muster können einzelne Längsreihen oder vier oder mehr Längsreihen zu je einer Gruppe zusammengefasst sein.

Es ist zu beachten, dass es bei der Konfiguration von Fig. 4B Gruppen gibt, die zwar benachbarte Längsreihen umfassen, die benachbarten Längsreihen jedoch verschiedenen Teilrahmen angehören. Beispielsweise umfasst die Gruppe G2 die Längsreihe L3, die an dem Teilrahmen 11 angebracht ist, und die Längsreihe L4, die an dem Teilrahmen 12 angebracht ist. Somit können die von der Bearbeitung ausgeschlossenen Feldbereiche noch feiner eingestellt werden.

Während die Gruppen der Konfigurationen von Fig. 4A und Fig. 4B benachbarte Längsreihen umfassen, zeigt Fig. 4C eine Konfiguration, bei welcher nicht benachbarte Längsreihen zu einer Gruppe zusammengefasst werden. Genauer gesagt bilden alle ungeradzahligen Längsreihen L1, L3, L5, L7,... bis L17 eine Gruppe G1, und die geradzahigen Längsreihen L2, L4, L6, L8,... bis L18 bilden eine Gruppe G2. Somit sind alle Werkzeuge 20 auf die zwei Gruppen G1, G2 aufgeteilt, und jede Gruppe G1, G2 umfasst jeweils die Hälfte aller Werkzeuge 20. Diese Konfiguration ist besonders zweckmäßig, wenn jede Pflanzenreihe einer Längsreihe entspricht, sodass jede zweite Pflanzenreihe bereichsweise von der Bearbeitung ausgeschlossen werden. Gleichermaßen kann es Feldbereiche geben, in denen der Abstand zwischen zwei benachbarten Pflanzenreihen doppelt so groß ist wie derjenige in anderen Feldbereichen und die Bearbeitung nur innerhalb der Pflanzenreihen erwünscht ist. Auch in diesem Fall kann durch die Konfiguration von Fig. 4C die Bearbeitung bereichsweise ausgeschlossen werden, sodass keine unnötige Bearbeitung zwischen den Pflanzenreihen erfolgt.

Während die Untergruppen der Konfigurationen von Figuren 4A bis 4C den Längsreihen entsprechen, zeigt Fig. 4D eine Konfiguration, bei welcher jede Untergruppe ein einzelnes Werkzeug 20 umfasst. Wie in Fig. 3 dargestellt ist, sind die Werkzeuge 20 der Bodenbearbeitungsvorrichtung 1 bei dem ersten Ausführungsbeispiel in drei Querreihen Q1, Q2, Q3 und 18 Längsreihen L1 bis L18 angeordnet. Dadurch kann jedes Werkzeug 20 von Fig. 3 und somit jede Untergruppe in Koordinatenform dargestellt werden. Das Werkzeug 20, welches in der oberen linken Ecke in Fig. 3 angeordnet ist, trägt die Koordinaten Q1L1, weil es der Querreihe Q1 und der Längsreihe L1 angehört. Dahinter folgen die zwei Werkzeuge 20 mit den Koordinaten Q2L1 und Q3L1, während darunter die zwei Werkzeuge 20 mit den Koordinaten Q1L2 und Q1L3 folgen. Dieses Muster kann bis zu der Koordinate Q3L18 fortgesetzt werden, um alle 54 der Werkzeuge 20 zu benennen. Im Folgenden wird "Werkzeug 20 mit den Koordinaten..." weggelassen, sodass beispielsweise auf "Q1L2" statt auf "Werkzeug 20 mit den Koordinaten Q1L2" verwiesen wird.

Fig. 4D zeigt in tabellarischer Form einen Ausschnitt der Bodenbearbeitungsvorrichtung 1 in der Draufsicht, wobei drei Spalten den Querreihen Q1 bis Q3 und vier Zeilen den Längsreihen L1 bis L4 entsprechen. Die Längsreihen L5 bis L18 sind nicht detailliert dargestellt. Die Gruppen in Fig. 4D fassen Untergruppen und somit Werkzeuge 20 zusammen, die in der Draufsicht diagonal verlaufen. Die Gruppe G1 umfasst lediglich Q1L1, d.h. das obere linke Eck in Fig. 4D. Die Gruppe G2 umfasst Q1L2 und Q2L1 und somit eine diagonal verlaufende Reihe, die an die Gruppe G1 angrenzt. Die Gruppe G3 umfasst Q1L3 Q2L2 und Q3L1 und somit eine diagonal verlaufende Reihe, die an die Gruppe G2 angrenzt. Die Gruppe G4 umfasst Q1L4, Q2L3 und Q3L2 und somit eine diagonal verlaufende Reihe, die an die Gruppe G3 angrenzt. Auf der anderen Seite der Bodenbearbeitungsvorrichtung 1 sind gleichermaßen diagonal verlaufende Gruppen G5 (Q1L18) bis G8 (Q3L17, Q2L16 und Q1L15) vorgesehen, die den um die Mittelachse der Bodenbearbeitungsvorrichtung 1 gespiegelten Gruppen G1 bis G4 entsprechen. Zwischen G1 bis G4 und G5 bis G8 ist die Aufteilung beliebig, beispielsweise analog zu Fig. 4A.

### Modifikationen des ersten Ausführungsbeispiels

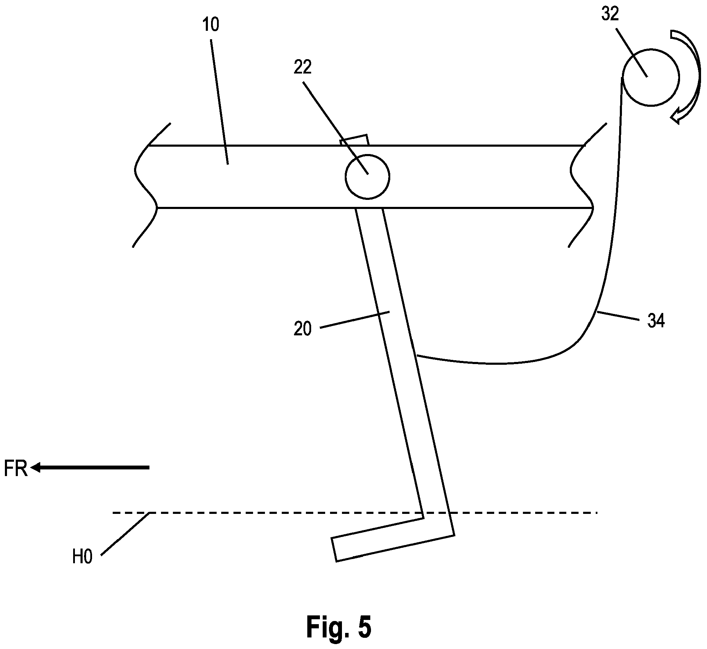

Bei dem ersten Ausführungsbeispiel hat die Aushubvorrichtung 30 als das Aushubantriebsbauteil 32 die Welle, die in der Fahrtrichtung FR vor dem Werkzeug 20 angeordnet ist. Stattdessen kann die Welle hinter dem Werkzeug 20 angeordnet sein, wie in Fig. 5 gezeigt ist. In diesem Fall wird das freie Ende des Seils nicht an dem vorstehenden Ende 24 und somit oberhalb des Lagers 22, sondern unterhalb des Lagers 22 an dem Werkzeug 20 angebracht. Demzufolge entfällt das vorstehende Ende 24 des Werkzeugs 20, was den Aufbau vereinfacht.

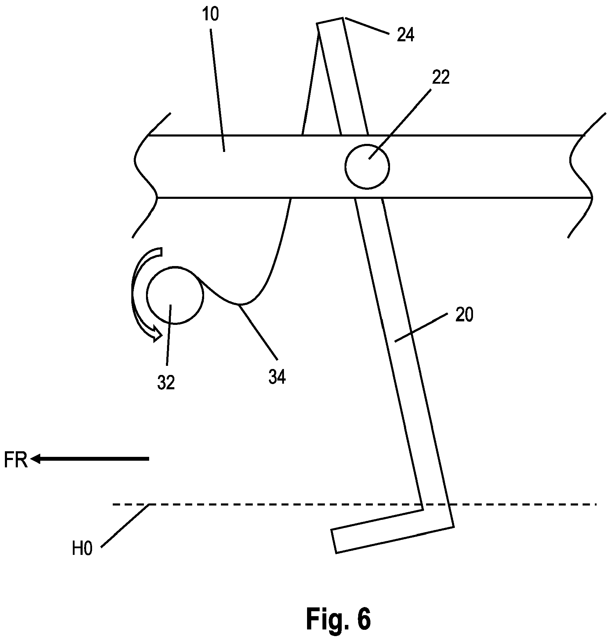

Bei dem ersten Ausführungsbeispiel ist die Welle auf Höhe des Rahmens 10 angeordnet, wie in Fig. 1 gezeigt ist. Die Welle kann jedoch oberhalb des Rahmens 10 angeordnet sein, wie in Fig. 5 gezeigt ist. Dadurch wird der Arbeitsraum der Werkzeuge nicht beeinträchtigt. Alternativ kann die Welle unterhalb des Rahmens 10 angeordnet sein, wie in Fig. 6 gezeigt ist. Dadurch wird die Bauhöhe der Bodenbearbeitungsvorrichtung verringert. In jedem Fall muss die Drehrichtung der Welle zum Ausheben der Werkzeuge gemäß der Anordnung der Welle und der Aufwickelrichtung der Seile angepasst werden.

Darüber hinaus verläuft die Welle bei dem ersten Ausführungsbeispiel quer zu der Fahrtrichtung FR und somit parallel zu den Querreihen Q1, Q2, Q3. Jedoch kann die Welle auch eine beliebige andere Ausrichtung haben.

Bei dem ersten Ausführungsbeispiel hat die Aushubvorrichtung 30 mehrere Wellen als Aushubantriebsbauteile 32. Jedes Aushubantriebsbauteil 32 ist mit mehreren Koppelbauteilen 34 versehen, die bei dem ersten Ausführungsbeispiel als Seile ausgeführt sind. Das Aushubantriebsbauteil 32 ist mittels der Koppelbauteile 34 mit allen Werkzeugen 20 einer Gruppe gekoppelt. Daher entspricht die Anzahl Koppelbauteile 34 einer Untergruppe der Anzahl von Werkzeugen 20 in einer Untergruppe, und die Anzahl der Aushubantriebsbauteile 32 entspricht der Anzahl der Gruppen. Es ist jedoch auch eine Konfiguration umsetzbar, bei der mehrere Aushubantriebsbauteile pro Gruppe vorgesehen sind. Ferner ist eine Konfiguration umsetzbar, bei der jedes Aushubantriebsbauteil nur eine Untergruppe betätigt.

Die Koppelbauteile sind nicht auf Seile beschränkt. Die Koppelbauteile können stattdessen starre Bauteile sein, die sowohl Zug- als auch Druckkräfte zwischen dem Aushubantriebsbauteil und dem Werkzeug übertragen. In diesem Fall kann durch eine Rückdrehung der Welle das gekoppelte Werkzeug von der Ruhelage in die Arbeitslage gebracht werden.

Die Konfiguration von Fig. 4C entspricht einer Aufteilung der Werkzeuge auf zwei Gruppen, die jeweils jede zweite Längsreihe umfassen, was einem Faktor von 2 entspricht. Jedoch können analog die Werkzeuge auf drei Gruppen aufgeteilt werden, die jeweils jede dritte Längsreihe umfassen (G1 = L1, L4, L7...; G2 = L2, L5, L8...; G3 = L3, L6, L9...), was einem Faktor von 3 entspricht. Jeder andere Faktor kann analog umgesetzt werden, solange er ganzzahlig ist.

Bei den Konfigurationen von Fig. 4A bis 4C umfassen alle Untergruppen die gleiche Anzahl Werkzeuge 20, jedoch können die verschiedenen Untergruppen eine unterschiedliche Anzahl Werkzeuge 20 umfassen, wie bei Fig. 4D.

Zusätzlich zu der Aushubvorrichtung 30 kann eine Arbeitsdruckeinstellvorrichtung vorgesehen sein, die einen Arbeitsdruck der Werkzeuge 20 einstellt. Ein Beispiel einer Arbeitsdruckeinstellvorrichtung ist in DE 10 2016 124 517 A1 offenbart.

### Zweites Ausführungsbeispiel

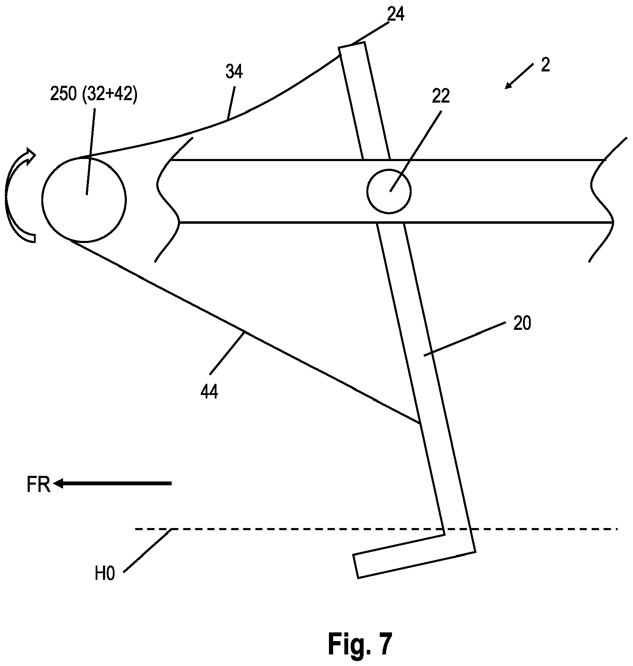

Eine Bodenbearbeitungsvorrichtung 2 eines zweiten Ausführungsbeispiels ist in Figuren 7 bis 9 dargestellt und sieht zusätzlich zu der Aushubvorrichtung 30 eine Arbeitsdruckeinstellvorrichtung 40 vor, die ein Einstellantriebsbauteil 42 und Einstellkoppelbauteile 44 aufweist.

Das Einstellantriebsbauteil 42 ist bei dem zweiten Ausführungsbeispiel eine Welle, die als Antrieb zur Betätigung der Werkzeuge 20 einer Untergruppe dient. Die Einstellkoppelbauteile 44 sind bei dem zweiten Ausführungsbeispiel Seile, die das Einstellantriebsbauteil 42 jeweils mit einem der Werkzeuge 20 koppeln. Durch die Kopplung wird eine eingestellte Kraft in Richtung der Arbeitslage aufgebracht, um somit den Arbeitsdruck des Werkzeugs 20 auf den Boden einzustellen.

Bei dem zweiten Ausführungsbeispiel bilden das Einstellantriebsbauteil 42 der Arbeitsdruckeinstellvorrichtung 40 und das Antriebsbauteil 32 der Aushubvorrichtung 30 eine Einheit. Genauer gesagt bildet eine gemeinsame Welle 250 sowohl das Einstellantriebsbauteil 42 als auch das Antriebsbauteil 32.

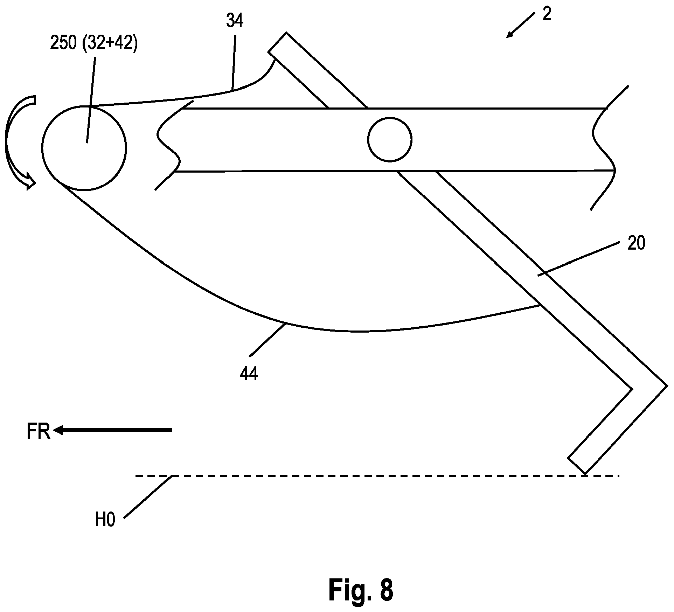

Wie in Fig. 7 dargestellt ist, ist das Koppelbauteil 34 oberhalb des Lagers 22 mit dem vorstehenden Ende 24 des Werkzeugs 20 gekoppelt, und das Einstellkoppelbauteil 44 ist unterhalb des Lagers 22 mit dem Werkzeug 20 gekoppelt. Ferner sind das Koppelbauteil 34 und das Einstellkoppelbauteil 44 durch Seile ausgebildet, die in gegenläufigen Richtungen um die gemeinsame Welle 250 gewickelt sind. Die Seillängen sind derart gewählt, dass es eine Drehposition der Welle gibt, in welcher beide Seile lose hängen (Fig. 8).

In Fig. 7 wird die gemeinsame Welle 250 mit einem Drehmoment in der Richtung des dargestellten Pfeils (Einstelldrehrichtung) beaufschlagt. Das Seil des Koppelbauteils 34 hängt lose und überträgt keine nennenswerten Kräfte auf das Werkzeug 20. Das Seil des Einstellkoppelbauteils 44 wird durch das Drehmoment aufgewickelt und bringt eine Zugkraft auf das Werkzeug 20 auf, die es in Richtung des Bodens drängt. Daher spannt die gemeinsame Welle 250 zusammen mit dem Einstellkoppelbauteil 44 das Werkzeug 20 gegen den Boden vor und stellt somit den Arbeitsdruck des Werkzeugs 20 ein.

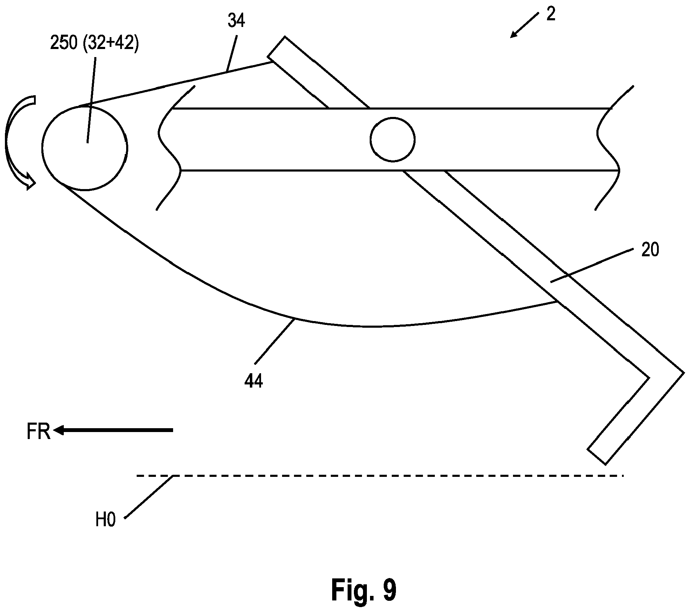

Um das Werkzeugs 20 auszuheben, wird die gemeinsame Welle 250 nun in der Richtung des in Fig. 8 und 9 dargestellten Pfeils (Aushubdrehrichtung) gedreht. Dadurch wird das Seil des Koppelbauteils 34 aufgewickelt, während das Seil des Einstellkoppelbauteils 44 abgewickelt wird. Somit lässt der Arbeitsdruck nach, das Werkzeug 20 verlässt die Arbeitsposition und beginnt, frei zu schwenken. Je nach externen Kräften, die durch das Eigengewicht der Seile und durch den Boden auf das Werkzeug 20 einwirken, nimmt das Werkzeug 20 eine in Fig. 8 gezeigte Zwischenposition ein. Wird die Welle weiter in der Aushubdrehrichtung gedreht, wird das Seil des Koppelbauteils 34 weiter aufgewickelt, sodass es mittels Zugkräfte das Werkzeug 20 aushebt und in die Ruhelage bringt. Die Ruhelage wird gehalten, solange das Drehmoment der Welle in der Aushubdrehrichtung aufrechterhalten wird.

### Drittes Ausführungsbeispiel

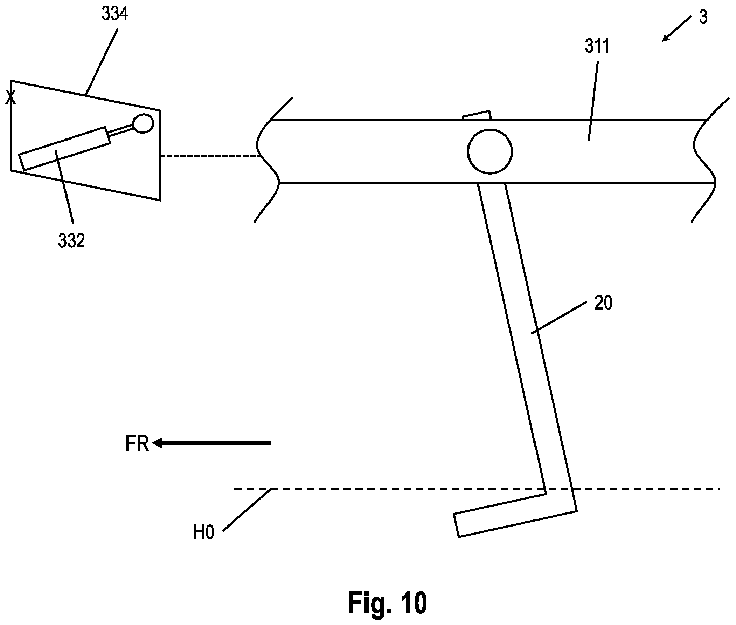

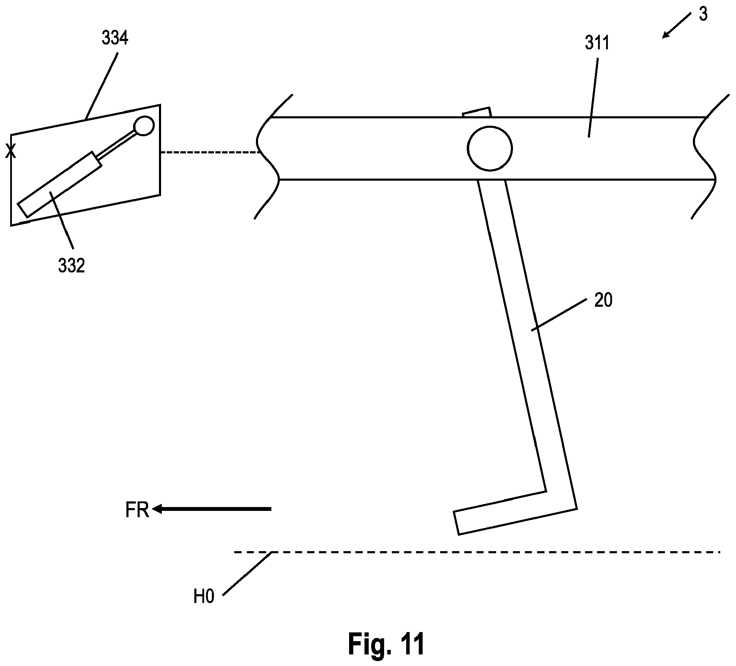

Eine Bodenbearbeitungsvorrichtung 3 eines dritten Ausführungsbeispiels ist in Figuren 10 und 11 dargestellt. Bei der Aushubvorrichtung der Bodenbearbeitungsvorrichtung 3 des dritten Ausführungsbeispiels bildet ein Stellglied 332 das Aushubantriebsbauteil, und ein Viereck 334 ist als ein starres Koppelbauteil vorgesehen. Darüber hinaus sind bei dem dritten Ausführungsbeispiel eine Vielzahl von Teilrahmen 311 vorgesehen, die quer zu der Fahrtrichtung FR nebeneinander angeordnet sind, wobei jeder Teilrahmen 311 eine oder mehrere Längsreihen von Werkzeugen 20 aufweist. Dadurch liegen bei dem dritten Ausführungsbeispiel Werkzeuge 20 in Längs- und Querreihen vor.

Das Viereck 334 hat ein vorderes Bauteil und ein hinteres Bauteil, die parallel sind und in der Fahrtrichtung FR jeweils vorne und hinten angeordnet sind, sowie ein oberes Bauteil und ein unteres Bauteil, die parallel sind und jeweils oben und unten angeordnet sind. Je zwei dieser vier Bauteile sind durch nicht dargestellte Gelenke miteinander verbunden, sodass die paarweise Parallelität gewährleistet ist. Demzufolge bildet das Viereck 334 vorliegend ein Parallelogramm, jedoch kann es ein anderes Trapez sein oder eine andere viergliedrige Konfiguration aufweisen, solange die nachfolgend beschriebene Funktionalität erfüllt ist. Das vordere Bauteil ist in vertikaler Ausrichtung an dem Rahmen 10 befestigt (in der Zeichnung durch ein Kreuz dargestellt) und stellt somit ein Festlager für den Teilrahmen 311 dar. Das hintere Bauteil ist an dem Teilrahmen 311 befestigt (in der Zeichnung durch eine gestrichelte Linie schematisch dargestellt). Das obere und untere Bauteil sind in der Lage, eine Verschiebung des hinteren Bauteils zu führen, wobei die Verschiebung eine vertikale Komponente aufweist. Die vertikale Komponente wird dazu genutzt, ein Ausheben des Teilrahmens 311 und somit der an dem Teilrahmen 311 angebrachten Werkzeuge 20 zu ermöglichen.

Ein Ende des Stellglieds 332 ist an dem Gelenk zwischen dem vorderen und unteren Bauteil angebracht. Das andere Ende des Stellglieds 332 ist an dem Gelenk zwischen dem hinteren und oberen Bauteil angebracht. Somit führt eine Längenänderung des Stellglieds 332 dazu, dass sich eine Diagonale des Vierecks 334 verlängert. Ausgehend von der in Fig. 10 dargestellten Position wird durch eine Betätigung des Stellglieds 332 (bzw. ein Verlängern des Stellglieds 332) das hintere Bauteil nach oben geführt. Daher wird der gesamte Teilrahmen 311 und somit die an dem Teilrahmen 311 angebrachten Werkzeuge 20 ausgehoben, was in Fig. 11 dargestellt ist.

Das Stellglied 332 ist vorliegend ein hydraulischer Zylinder. Durch ein derartiges hydraulisches Stellglied können sehr hohe Aushubkräfte aufgebracht werden, was insbesondere bei schweren Werkzeugen vorteilhaft ist. Zudem weisen hydraulische Stellglieder einen geringen Platzbedarf auf, womit ein platzsparender Aufbau möglich ist. Ferner ist an Traktoren häufig eine hydraulische Druckleitung bereits vorhanden, sodass das hydraulische Stellglied keine gesonderte Pumpe oder andere Vorrichtung zur Druckerzeugung benötigt. In einem solchen Fall ist ein kostengünstiger Aufbau möglich.

Alternativ kann ein pneumatisches Stellglied als das Aushubantriebsbauteil vorgesehen sein, wodurch die Aushubkraft mit kürzesten Reaktionszeiten aufgebracht oder zurückgenommen werden. Die höheren Aushubgeschwindigkeiten ermöglichen höhere Fahrgeschwindigkeiten, womit die Effizienz gesteigert wird.

Alternativ kann ein elektrisches oder elektromagnetisches Stellglied als das Aushubantriebsbauteil vorgesehen sein. In diesem Fall wird der Aufbau dahingehend vereinfacht, dass keine Einrichtung zur Druckerzeugung erforderlich ist, was zudem den Platzbedarf reduziert. Zudem ist die Steuerungsgenauigkeit höher und die vorstehend zum pneumatischen Stellglied erwähnten Vorteile der Aushubgeschwindigkeit können ebenfalls erzielt werden.

Unabhängig von der Art des Stellglieds 332 erzielt die Bodenbearbeitungsvorrichtung 3 des dritten Ausführungsbeispiels dieselben Vorteile wie diejenigen des ersten und zweiten Ausführungsbeispiels. Darüber hinaus kann zur Anpassung des Angriffswinkels des Werkzeugs im Boden die Rahmenhöhe (Abstand von Arbeitsgrenzhöhe H0 bis Teilrahmen 311) mithilfe des Stellglieds 332 einfach aus der Kabine heraus und/oder automatisch eingestellt werden, beispielsweise auf Grundlage von Kamera-Auswertungen des Pflanzenbestandes oder auf Grundlage von Feld- oder Routenkarten mithilfe von Globalen Navigationssatellitensystemen. Zudem ist es durch das Stellglied 332 möglich, den Druck auf den Teilrahmen 311 separat von der Arbeitsdruckeinstellung des zweiten Ausführungsbeispiels und unabhängig davon einzustellen.

### Weitere Modifikationen

Es wurden Ausführungsbeispiele beschrieben, bei welchen das Aushubantriebsbauteil eine - ggf. gemeinsame - Welle ist, die gedreht wird. Jedoch kann die beschriebene Welle nicht nur gedreht, sondern alternativ oder zusätzlich geschwenkt und/oder linear verschoben werden, um die vorgegebene Betätigung zu erzielen. Zudem ist die Erfindung nicht auf Wellen beschränkt, und das Aushubantriebsbauteil kann jede andere Art von Stellglied sein, solange das Stellglied einzelne oder gruppierte Werkzeuge in die Ruhelage versetzen kann. Beispielsweise kann das Stellglied ein elektromagnetischer Aktuator oder ein hydraulischer Zylinder sein.

Die Unterteilung in Untergruppen wurde in dem Kontext beschrieben, in dem die Untergruppen geometrische Eigenschaften der zu bearbeitenden Bereiche abbilden. Jedoch kann sich die bereichsweise Bearbeitung nicht auf eine Geometrie, sondern auf eine Bearbeitungsdichte bzw. Bearbeitungsintensität beziehen, wonach verschiedene Bereiche mit einer verschiedenen Anzahl von Werkzeugen pro Fläche zu bearbeiten sind. In diesem Fall ist eine zweckmäßige Unterteilung in Untergruppen derart, dass eine gleichmäßig verteilte Auswahl von Werkzeugen zu einer Untergruppe oder Gruppe zusammengefasst werden.

### Bezugszeichenliste

- 1: Bodenbearbeitungsvorrichtung des ersten Ausführungsbeispiels
- 2: Bodenbearbeitungsvorrichtung des zweiten Ausführungsbeispiels
- 3: Bodenbearbeitungsvorrichtung des dritten Ausführungsbeispiels
- 10: Rahmen
- 11-16: Teilrahmen 1-6
- 20: Werkzeug (Zinken)
- 22: Lager
- 24: vorstehendes Ende
- 30: Aushubvorrichtung
- 32: Antriebsbauteil (Welle)
- 34: Koppelbauteil (Seil)
- 40: Arbeitsdruckeinstellvorrichtung
- 42: Einstellantriebsbauteil
- 44: Einstellkoppelbauteil
- 250: gemeinsame Welle (zweites Ausführungsbeispiel)
- 311: Teilrahmen (drittes Ausführungsbeispiel)
- 332: Stellglied (drittes Ausführungsbeispiel)
- 334: Viereck (drittes Ausführungsbeispiel)
- FR: Fahrtrichtung
- H0: Arbeitsgrenzhöhe
- L: Längsreihe (L1-L18)
- Q: Querreihe (Q1-Q3)
- G: Gruppe (G1-G4)
- T: Traktor

## Patentansprüche

1. Bodenbearbeitungsvorrichtung (1; 2; 3), die konfiguriert ist, in einer Fahrtrichtung (FR) bewegt zu werden und eine Bodenbearbeitung durchzuführen, mit:
einem Rahmen (10), der über dem Boden in der Fahrtrichtung (FR) zu bewegen ist; und
einer Vielzahl von Werkzeugen (20), die in mehreren quer zu der Fahrtrichtung (FR) verlaufenden Querreihen (Q1, Q2, Q3) angeordnet sind, um zumindest einen Teil der Bodenbearbeitung durchzuführen, wobei
jedes Werkzeug (20) ein Lager (22) hat, um welches es zwischen einer Arbeitslage, in der der Boden bearbeitet wird, und einer Ruhelage schwenkbar ist, in der der Boden nicht bearbeitet wird,
jedes Lager (22) das jeweilige Werkzeug (20) mit dem Rahmen (10) verbindet, und
die Werkzeuge (20) unabhängig voneinander schwenkbar sind;
**gekennzeichnet durch**
eine Aushubvorrichtung (30), die jedes der Werkzeuge (20) von der Arbeitslage in die Ruhelage schwenken kann; wobei
die Vielzahl der Werkzeuge (20) in mehreren Untergruppen unterteilt ist;
eine oder mehrere Untergruppen eine Gruppe (G1-G4) bilden, sodass die Werkzeuge (20) in mindestens zwei Gruppen unterteilt sind; und
die Aushubvorrichtung (30) jede Gruppe (G1-G4) separat betätigen kann, um die Werkzeuge (20) der betätigten Gruppe (G1-G4) von der Arbeitslage zu der Ruhelage zu bewegen und dort zu halten.

2. Bodenbearbeitungsvorrichtung (1; 2; 3) nach Anspruch 1, wobei die Werkzeuge (20) Zinken zur mechanischen Unkrautregulierung sind.

3. Bodenbearbeitungsvorrichtung (1; 2; 3) nach Anspruch 1 oder 2, wobei die Werkzeuge (20) zudem in Längsreihen (L1-L18) angeordnet sind, die parallel zu der Fahrtrichtung (FR) verlaufen.

4. Bodenbearbeitungsvorrichtung (1; 2; 3) nach einem der Ansprüche 1 bis 3, wobei eine Untergruppe ausschließlich durch Werkzeuge (20) gebildet wird, die derselben Längsreihe (L1-L18) oder derselben Querreihe (Q1, Q2, Q3) angehören.

5. Bodenbearbeitungsvorrichtung (1; 2; 3) nach einem der Ansprüche 1 bis 3, wobei eine Untergruppe durch mehrere Werkzeuge (20) gebildet wird, die mehreren Längsreihen (L1-L18) und mehreren Querreihen (Q1, Q2, Q3) angehören.

6. Bodenbearbeitungsvorrichtung (1; 2; 3) nach Anspruch 5, wobei eine Untergruppe durch mehrere Werkzeuge (20) gebildet wird, die eine diagonal verlaufende Reihe bilden.

7. Bodenbearbeitungsvorrichtung (1; 2; 3) nach einem der Ansprüche 4 bis 6, wobei der Rahmen (10) mehrere Teilrahmen (11-16; 311) aufweist und jeder Teilrahmen (11-16; 311) mindestens eine Untergruppe umfasst.

8. Bodenbearbeitungsvorrichtung (1; 2; 3) nach Anspruch 7, wobei eine Gruppe (G1-G4) nur Untergruppen umfasst, die demselben Teilrahmen (11-16; 311) angehören.

9. Bodenbearbeitungsvorrichtung (1; 2; 3) nach Anspruch 7 oder 8, wobei eine Gruppe (G1-G4) Untergruppen umfasst, die verschiedenen Teilrahmen (11-16; 311) angehören.

10. Bodenbearbeitungsvorrichtung (1; 2; 3) nach einem der Ansprüche 1 bis 9, wobei die Aushubvorrichtung (30):
ein Aushubantriebsbauteil (32; 332), das als Antrieb zur Betätigung der Werkzeuge (20) einer Untergruppe dient; und
Koppelbauteile (34; 334) aufweist, wovon jedes das Aushubantriebsbauteil (32; 332) mit einem der Werkzeuge (20) koppelt, die der entsprechenden Untergruppe angehören.

11. Bodenbearbeitungsvorrichtung (3) nach einem der Ansprüche 1 bis 9, wobei die Aushubvorrichtung (30):
ein Aushubantriebsbauteil (332), das als Antrieb zur Betätigung der Werkzeuge (20) einer Untergruppe dient; und
Koppelbauteile (334) aufweist, wovon jedes das Aushubantriebsbauteil (332) mit mehreren der Werkzeuge (20) koppelt, die der entsprechenden Untergruppe angehören.

12. Bodenbearbeitungsvorrichtung (1; 2; 3) nach Anspruch 10 oder 11, wobei das Koppelbauteil (34; 334) unterhalb des Lagers (22) mit dem Werkzeug (20) gekoppelt ist.

13. Bodenbearbeitungsvorrichtung (1; 2; 3) nach Anspruch 10 oder 11, wobei das Koppelbauteil (34; 334) oberhalb des Lagers (22) mit dem Werkzeug (20) gekoppelt ist.

14. Bodenbearbeitungsvorrichtung (1; 2) nach Anspruch 12 oder 13, wobei das Koppelbauteil (34) ein Zugbauteil ist, das Zugkräfte übertragen kann und Druckkräfte nicht übertragen kann, wobei das Zugbauteil ein Seil ist und das Seil um eine Welle gewickelt wird, die als Aushubantriebsbauteil (32) dient.

15. Bodenbearbeitungsvorrichtung (3) nach Anspruch 12 oder 13, wobei das Koppelbauteil (334) ein starres Bauteil ist, das sowohl Zugkräfte als auch Druckkräfte übertragen kann.

16. Bodenbearbeitungsvorrichtung (1; 2; 3) nach Anspruch 14 oder 15, wobei das Bodenbearbeitungsvorrichtung (1; 2; 3) mehrere Aushubantriebsbauteile (32; 332) aufweist, wobei jedes Aushubantriebsbauteil (32; 332) genau eine Untergruppe oder genau eine Gruppe (G1-G4) betätigt.

17. Bodenbearbeitungsvorrichtung (1; 2; 3) nach Anspruch 16, wobei das Aushubantriebsbauteil (32; 332) manuell oder auf Grundlage von Kamera-Auswertungen des Pflanzenbestandes oder auf Grundlage von Feld- oder Routenkarten mithilfe von Globalen Navigationssatellitensystemen, angesteuert wird.

18. Bodenbearbeitungsvorrichtung (2) nach einem der Ansprüche 1 bis 17, ferner mit einer Arbeitsdruckeinstellvorrichtung (40) zum Einstellen eines Arbeitsdrucks der Werkzeuge (20), wobei die Arbeitsdruckeinstellvorrichtung (40):
ein Einstellantriebsbauteil (42), das als Antrieb zur Betätigung der Werkzeuge (20) einer Untergruppe dient; und
Einstellkoppelbauteile (44) aufweist, wovon jedes das Einstellantriebsbauteil (42) mit einem der Werkzeuge (20) koppelt, die der entsprechenden Untergruppe angehören.

19. Bodenbearbeitungsvorrichtung (2) nach Anspruch 18, soweit von Anspruch 14 abhängig, wobei das Einstellkoppelbauteil (44) Zugkräfte übertragen kann und Druckkräfte nicht übertragen kann, wobei:
wenn das Koppelbauteil (34) oberhalb des Lagers (22) mit dem Werkzeug (20) gekoppelt ist, das Einstellkoppelbauteil (44) unterhalb des Lagers (22) mit dem Werkzeug (20) gekoppelt ist; und
wenn das Koppelbauteil (34) unterhalb des Lagers (22) mit dem Werkzeug (20) gekoppelt ist, das Einstellkoppelbauteil (44) oberhalb des Lagers (22) mit dem Werkzeug (20) gekoppelt ist, und wobei
das Einstellantriebsbauteil (42) und das Aushubantriebsbauteil (32) durch eine gemeinsame Welle (250), die gedreht, geschwenkt und/oder linear verschoben werden kann, ausgebildet sind;
das Koppelbauteil (34; 334) und das Einstellkoppelbauteil (44) durch Seile ausgebildet sind, die in gegenläufigen Richtungen um die gemeinsame Welle (250) gewickelt sind, sodass
wenn die gemeinsame Welle (250) in einer Aushubdrehrichtung betätigt wird, das Koppelbauteil (34) betätigt wird, um mittels Zugkräfte die Werkzeuge (20) auszuheben, während das Einstellkoppelbauteil (44) keine Kräfte überträgt, und
wenn die gemeinsame Welle (250) in einer Einstelldrehrichtung betätigt wird, die der Aushubdrehrichtung entgegengesetzt ist, das Einstellkoppelbauteil (44) betätigt wird, um mittels Zugkräfte den Arbeitsdruck der Werkzeuge (20) einzustellen, während das Koppelbauteil (34) keine Kräfte überträgt.
